# EUROPEAN PATENT APPLICATION

(11) **EP 1 885 019 A1**
(43) Date of publication of application: **06.02.2008**
(21) Application number: 06015342.6
(22) Date of filing: 24.07.2006
(51) Int. Cl.: H01Q 1/22, H01Q 7/00, G06K 19/077, H01L 23/48

(54) **A method of fabricating a 3D RFID antenna and device manufactured therewith**

(71) Applicant: Schott Advanced Packaging Singapore Te. Ltd., Singapore 738068 (SG)
(72) Inventor: Viswanadam, Gautham, Serangoon North Avenue 1 (SG); Muecke, Klaus W., Singapore 589629 (SG); Leib, Jürgen, 85345 Freising (DE)
(74) Representative: Herden, Andreas F.

(57) **Abstract**

It is an object of the invention to improve RF-ID-chips so as to enable for a cost-effective waver-level fabrication of RFID-assemblies with antennas having a longer transmission range. For this purpose, a transponder device according to the invention comprises at least one integrated circuit on a first substrate, the first substrate having a first surface with terminal contacts for contacting the integrated circuit, whereby the transponder device further comprises at least two further substrates or layers each having a coil arranged thereon, whereby the further substrates and the first substrate are stacked together, and the coils are connected to the terminal contacts on the first substrate via conductors, and whereby the coils together form an antenna coil for the transponder device.

## Description

### FIELD OF THE PRESENT INVENTION

The invention generally concerns radio frequency identification devices (RFID's). In particular, the invention relates to antennas for RFID-chips a method of producing the same.

### BACKGROUND OF THE INVENTION

Radio frequency identification has become a technology of growing importance, as it offers contact-less point-to-point data transmission in a communication system with tracking of goods and materials and relaying the data in best time. Nowadays, RFID is increasingly used in many applications including tracking of animals, parcels, luggage and even employees or infants, as well as inventory management control. The RFID technology generally relies on integrated RFID-chips with a suitable antenna to generate required EMF for wireless point-to-point communication.

There are various techniques known for manufacturing the antennas, including coil-on-chip fabrication. For example, United States Patent 6,496,113 discloses a radio frequency identification tag on a single layer substrate. The single layer substrate comprises a semiconductor integrated circuit RFID tag device and antenna circuit. A connection jumper may be used to bridge over the antenna circuit coil turns. The RFID tag device is located on the same side as an inductor coil and capacitor which forms a parallel resonant antenna circuit. The inductor coil has an inner end and an outer end. The inner or outer end may be connected directly to the RFID tag device and the outer or inner end be may connected to the RFID tag device with a jumper over the inductor coil turns, or the RFID tag device may bridge the inductor coil turns when being connected to both the inner and outer ends. An encapsulation (glop top) may be used to seal the RFID tag device and jumper, and an insulated coating may be used to cover the entire surface of the substrate to create an inexpensive "chip-on-tag." The encapsulation may be epoxy, plastic or any protective material known to one of ordinary skill in the art of electronic circuit encapsulation. The insulated coating may be of any type suitable for the application of use of the RFID tag. However, although a very compact design is achieved, a jumper needs to be fabricated which is well isolated with respect to the coil windings. Moreover, coil-on-chip antennas generally are suitable for short read ranges only.

A coil-on-chip arrangement for RFID-tags is also known from United States Patent 6,268,796. The chip as disclosed therein has backside and a front side coated with conductive traces, which are connected through conductive traces on the sides of two elongate through-hole slots formed on the chip to form an operative coil having the chip as a core. In one embodiment, the antenna chip may be stacked above an integrated circuit. In another embodiment, the integrated circuit may be formed on the antenna chip. The antenna chip may include a high magnetic permeability layer to increase the inductance of the coil, a capacitor to tune the coil to a desired frequency, and a coupling capacitor to power the integrated circuit. However, as the coil is wound around the chip, which is naturally very flat, the coil aperture is very small.

Other techniques are based on the connection of external antennas to the chips. However, connecting external antennas to the chip is difficult, if not impossible to be accomplished on wafer level. Accordingly, these methods are less favourable with respect to the production costs.

### SUMMARY OF THE INVENTION

It is therefore an object of the invention to improve RF-ID-chips so as to enable for a cost-effective waver-level fabrication of RFID-assemblies with antennas having a longer transmission range compared to known coil-on-chip antennas.

This object is already achieved in a surprisingly simple manner by the object of the independent claims. Further, advantageous refinements and configurations are defined in the dependent claims.

Accordingly, the invention provides a transponder device such as a RFID-device or RFID-tag, comprising at least one integrated circuit on a first substrate, the first substrate having a first surface with terminal contacts for contacting said integrated circuit, whereby the transponder device further comprises at least two further substrates each having a coil arranged thereon, whereby the further substrates and the first substrate are stacked and bonded together, and whereby the coils are connected to the terminal contacts on the first substrate via conductors, and whereby the coils together form an antenna coil for the transponder device.

The transponder device according to one embodiment of the invention may be produced by:
- providing a first substrate comprising at least one integrated circuit, the first substrate having a first surface with terminal contacts for contacting the integrated circuit,
- producing coils on each of the at least two further substrates,
- stacking and bonding the first substrate and the at least two further substrates together, and
- connecting the coils to the terminal contacts on the first substrate by producing conductors, so that the coils together form an antenna coil for the transponder device.

Alternatively or in addition to stacking further substrates to the first substrate, a stack of insulating layers with coils thereon may be produced. It is preferred to produce the layers by vacuum-deposition of an insulating material. Particularly, the layers may be glass-layers. Glass is particularly suitable due to its excellent insulating properties. Moreover, as a glass layer is a very good diffusion barrier, the glass layers may additionally serve as a hermetic packaging for the RFID-chip. Furthermore, glass may be easily deposited by thermal evaporation. In difference to other vacuum deposition methods, thermal evaporation allows for high deposition rates. It is particularly preferred to deposit the insulating layers by electron beam evaporation. As the electron beam can be focused to a small spot on the glass target to be evaporated, a high deposition rate can be achieved with comparably low power and moderate heating-up of the substrate to be coated. Alternatively, plastic layers may be employed as insulating layers. In particular, structured plastic layers may be produced by photolithographic structuring of a photosensitive plastic layer such as polyimide (PI) or bisbenzocyclobutene (BCB).

The method preferably further includes thinning the further substrates. This is very advantageous, if, e.g. semiconductor wafers are employed as further substrates.
Due to thinning, the introduction of conducting passages for electrical connecting the coils is facilitated. Furthermore, the overall height of the device is kept small.

The stacking of coil layers on the further substrates, as it is proposed by the invention now provides for a enhanced flexibility in choosing the conductor coil thickness. This way, the required induction factors and higher read distances can be achieved easily. Also, the inventive method can reduce the antenna cost significiantly compared to existing coil-on-chip technology.

According to a preferred embodiment of the invention, the conductors comprise at least one conducting channel or connection extending through at least one of the further substrates and transversely to the surfaces of the stacked substrates or layers facing each other. This way, a space-saving electrical connection to the coils extending through the substrates is established, which also allows for a fabrication at wafer level. Preferably, the conducting channels or connections may comprise conductor-filled and/or at least partly conductor lined openings and/or tapered through-holes. Tapered through holes may preferably be etch pits produced by a suitabe etching method. Due to the tapered shape, a deposition of conducting material onto the through-hole, e.g., by sputtering or evaporation, is facilitated. According to a preferred refinement, the through-holes may be filled or at least partially lined with a conducting material after bonding the further substrates together. Further, according to one embodiment of the invention, producing the conducting channels may also comprise producing tapered blind holes and thinning the further substrate on the side opposite to the side, in which the tapered blind holes have been introduced until the tapered blind hole opens to the thinned side.

If layers are employed alternatively or in addition to further substrates to electrically insulate the coils against each other, structured layers with openings or through holes may be produced by lift-off. In this case, the through holes in the layers for connecting the coils are be produced by producing a protrusion onto the surface to be coated, depositing the layer and then removing the protrusion together with the layer deposited thereon. The protrusion may in particular be produced by structured coating of the surface. Preferably, the protrusions may be generated by coating with a photoresist, exposing and developing the photoresist so that one or more protrusions remain from the photoresist layer. In order to facilitate the lift-off, it is further advantageous, if the height of the protrusion is larger than the thickness of the deposited layer. In this case, the upper edge of the protrusion is not covered by the deposited layer. This facilitates, e.g., intrusion of solvents for dissolution of the protrusion.

According to a further refinement, coils are produced having terminal contacts with an opening therein. Then, through holes through the substrates may be obtained by selectively etching the substrate material through the openings.

In order to contact the coils, it is advantageous, if at least two of the coils are connected to at least one of the terminal contacts on the first substrate via a conducting channel extending through at least the two further substrates. For example, the through-holes produced in each of the wafers may be brought into coincidence when the further wafers are stacked, so that a through-hole is produced which extends trough both wafers. The through hole may then be filled with conductive material to establish the connection of the coils.

Additionally or alternatively to through-holes for establishing an electrical connection between the coils, it is also possible to produce a connector which is arranged on a lateral surface of at least one of the further substrates. The conductor may be fabricated by deposition of conducting material onto the lateral surface, e.g. by sputtering or evaporation.

It is particularly preferred to employ thin film conductor coils which may be fabricated by structured deposition of condcting films onto the further substrates. These coils may in particular be flat spiral coil to increase inductance.

Similarly to the first substrate with the integrated circuit, the further substrates are preferably of inorganic rigid material, such as a semiconductor or glass. For example the further substrates may be silicon wafers, as the first substrate comprising the integrated ciruit. Using inorganic, rigid materials generally facilitates wafer level processing. Furthermore, electronic components may be included in or on the further substrates or layers. For example, a passive component may be formed on at least one of the further substrates or layers. The passive components may advantageously include capacitors and/or resistors for tuning the resonance frequency of the antenna. As well, one or more of the further substrates may comprise integrated circuitry, such as, e.g., memory circuitry. The integrated circuit of the further substrate may then be connected to the integrated circuit of the first substrates using similar contacts as employed for the coils. Accordingly, for example, additional through-hole contacts may be introduced into the further substrates and lined and/or filled with conductive material.

As mentioned, the inventive method most preferably is carried out on wafer-level, i.e. particularly carried out using wafers as first substrates having a plurality of integrated transponder circuits. It is thereby preferred, that at least the steps of
- producing coils on each of at least two further substrates,
- stacking and bonding the first substrate and the at least two further substrates together, and
- connecting the coils to the terminal contacts on said first substrate by producing conductors, so that said coils together form an antenna coil for said transponder device are carried out at wafer level. Accordingly, a wafer assembly is obtained comprising a plurality of transponder devices on a first wafer with further wafers with coils bonded thereon and coils of different wafers being electrically interconnected and further connected to terminal contacts of the integrated circuits so that the interconnected coils form antennas for the integrated circuits.

It is advantageous to employ a support substrate for assembly of the further substrates with the coils. Then, stacking and bonding the first substrate and the at least two further substrates together may comprise the steps of bonding a first of the at least two further substrates on a the support substrate and then bonding a second substrate of the at least two further substrates to the first of the at least two further substrates. The support substrate or support wafer imparts additional mechanical strength which facilitates the wafer processing. In particular, the first substrate of the at least two further substrates may be thinned after bonding to the support substrate and prior to bonding a second substrate of the at least two further substrates to the first of the at least two further substrates.

According to a refinement of the invention, the support substrate remains on the topmost of the stacked further substrates so that it forms a rigid cap substrate. This cap wafer, or, after dicing the wafer assembly may advantageously form a part of the packaging of the transponder devices.

The multilayered coils according to the invention may be connected in parallel or in series. If the coils are connected in parallel, the coil ends may be connected with two common conductors, such as common conducting channels extending through the further substrates. If the coils are connected in series and are flat spiral conductors, it is further advantageous, to stack flat spiral conductors with different sense of rotation. This way, in combination with suitably placed coil ends or coil terminal contacts, a bridge over the coil windings can be avoided.

Further, according to another refinement, the first substrate with the integrated transponder circuit may comprise a further coil as well, so as to further increase the impedance.

The above described features and advantages of the invention will become more apparent from a review of the following description, taken in conjunction with the accompanying drawings.

### BRIEF DESCRIPTION OF THE DRAWINGS

Figs. 1 to 9 illustrate fabrication steps according to a first embodiment of the invention.
Figs. 10 to 18 illustrate fabrication steps according to a second embodiment of the invention.
Fig. 19 shows an exploded view of an embodiment of the invention comprising a stack of coils connected in series.
Fig. 20 to 27 illustrate fabrication steps according to a third embodiment of the invention.

### DETAILED DESCRIPTION OF THE INVENTION

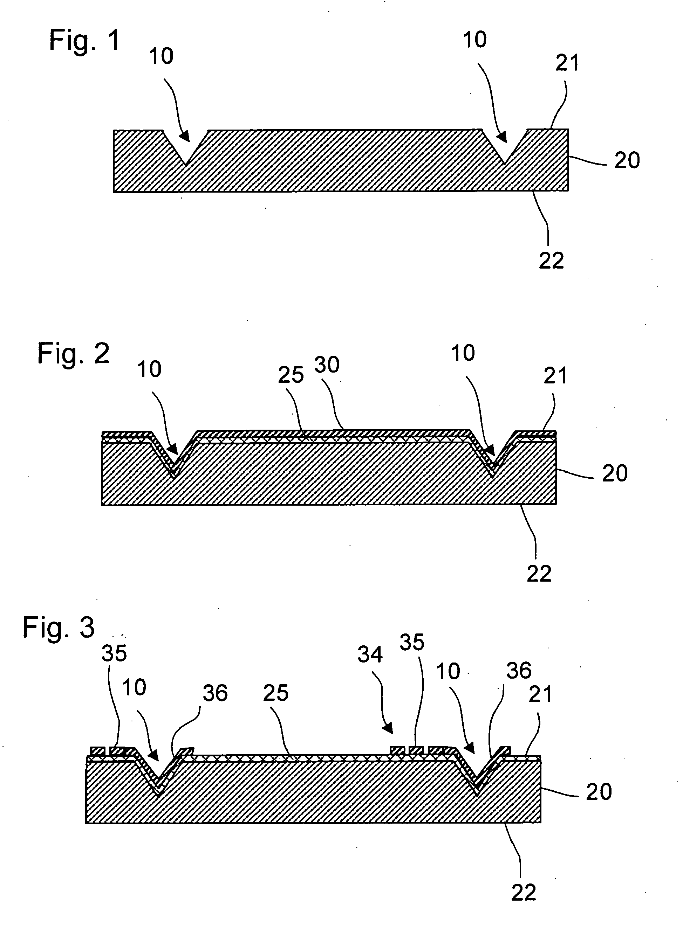

By means of cross sectional views, Figs. 1 to 9 depict process steps for fabricating a transponder device according to one embodiment of the invention. The method as illustrated in Figs. 1 to X bases on the steps of:
- providing a first wafer with integrated circuits and terminal contacts for contacting the integrated circuit,
- etching blind holes into a second wafer, then preferably
- coating a passivation film on the side of the second wafer with the blind holes, then
- fabricating a coil on the second wafer, and
- bonding the second wafer onto a support wafer, then
- thinning the wafer bonded onto a support wafer, at least until the blind-holes are exposed so that through-holes are formed,
- repeating the steps of etching blind holes, optionally coating a passivation film and fabricating a coil on a third wafer,
- bonding the third wafer onto the second wafer so that the blind-holes coincide with the through-holes of the unterlying wafer in their lateral positions,
- thinning the third wafer at least until the blind-holes are exposed so that through-holes are formed,
- optionally repeating the steps of etching blind holes, coating a passivation film, fabricating a coil, bonding and thinning at least until the blind-holes are exposed so that through-holes are formed on one or more wafers,
- masking the through-holes on the surface of the last bonded wafer,
- coating a passivation film,
- removing the mask,
- deposit conductor metal in the through-holes, and
- bond the so obtained stack to the first wafer comprising integrated circuits so that an electrical contact between the terminal contacts and the conductor metal is established.

Fig. 1 shows a section of the second wafer 20 with sides 21, 22 and blind-holes 10 etched into side 21. Due to the etching, the side walls of blind-holes 10 are tapered. Wafer 20 preferably is a semiconductor wafer, particularly a silicon wafer.

After producing the blind-holes 10, a passivation layer 25 is produced on side 21. As shown in Fig. 2, a metal layer 30 is deposited on side 21 of the wafer 20 in order to fabricate a thin film flat spiral coil thereon.

Using appropriate masking and etching, a coil 34 with windings 35 is produced from the metal-layer 30. Fig. 3 shows the wafer 20 after this processing step. Metal which has been deposited into the blind-holes 10 thereby forms terminal contacts 36 of the coil 34.

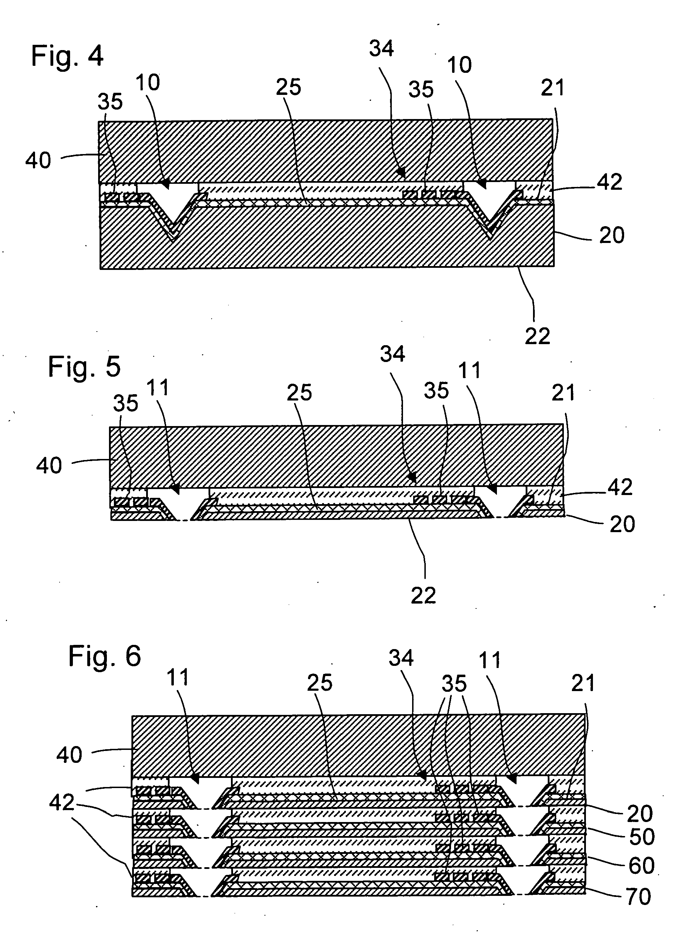

As shown in Fig. 4, the wafer 20 is then bonded to a support wafer 40. As an example, the wafers 20 and 40 have been bonded using a suitable adhesive 42.

As a next step, as illustrated in Fig. 5, the wafer 20 is thinned at least until the blind-holes 10 are exposed so that conductor-lined tapered through-holes 11 are formed.

The steps shown in Fig. 1 to 3, namely etching blind holes, coating a passivation film, fabricating a coil are repeated for a further wafer. This wafer is bonded onto wafer 20 so that the blind-holes laterally coincide with the through-holes of the unterlying wafer 20 and thinned as well, at least until the blind-holes are exposed so that through-holes are formed. These steps may be repeated for one or more further wafers, preferably semiconductor wafers like wafer 20, so that the assembly shown in Fig. 6 is obtained. In the exemplary assembly depicted in Fig. 6, four wafers 20, 50, 60, 70 have been stacked and bonded together, with laterally coinciding through holes 11.

Subsequently, a structured passivation layer is formed on the exposed side of the last bonded wafer 70. For that purpose, the side is masked with a photoresist layer masking the through-holes 11. Then, the side is coated with a passivation film and the mask is removed, so that a passivation layer 21 surrounding the through-holes 11 is formed.

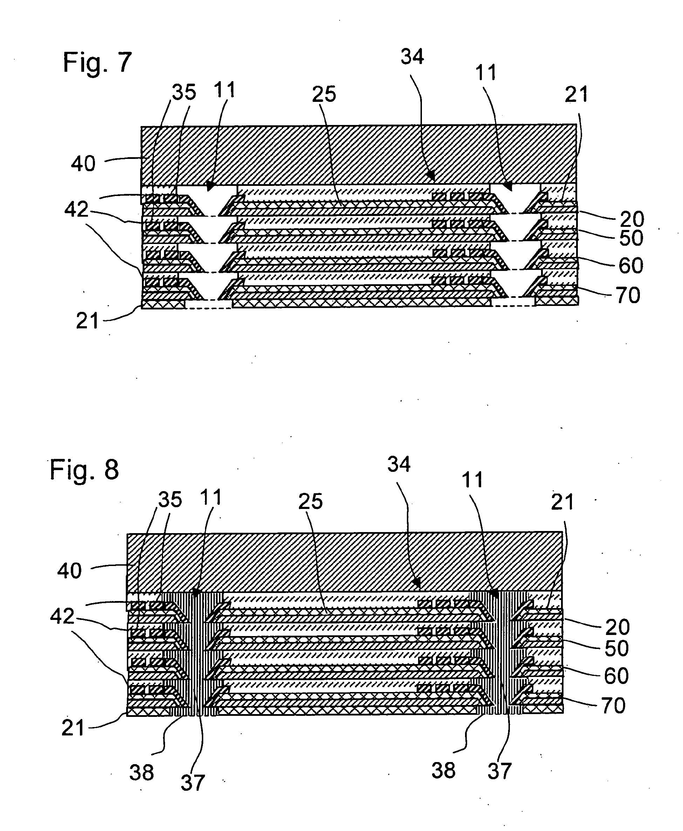

As shown in Fig. 8, the through-holes 11 of the stacked wafers 20, 50, 60, 70 are then filled with deposited conductor metal 37 so that conducting channels 38 are formed which extend through the wafers 20, 50, 60, 70, each electrically interconnecting the terminals of the coils 34. Alternatively to conductor metal, a conductive epoxy may be filled into the stacked through holes.

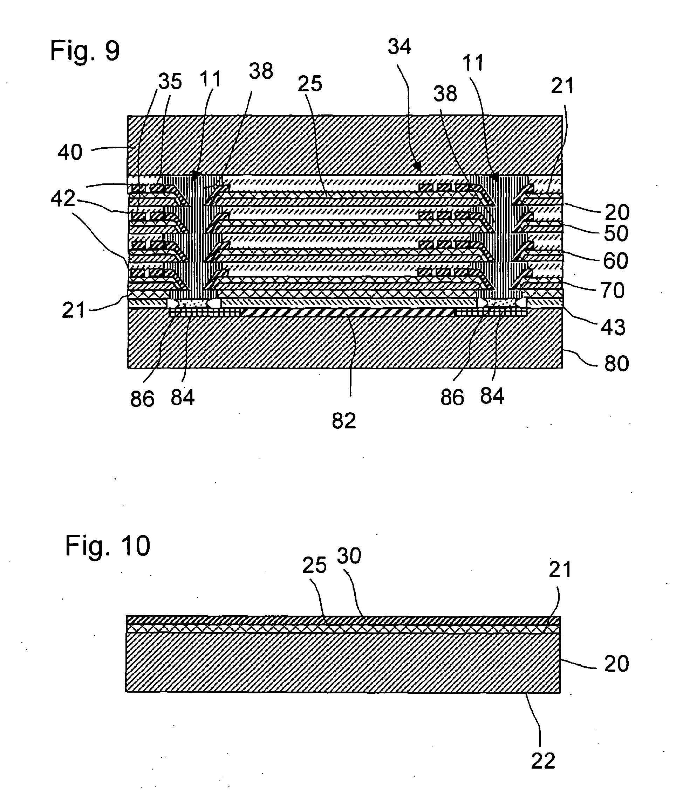

As shown in Fig. 9, the stack with the support wafer 40 and wafers 20, 50, 60, 70 with coils 34 thereon is bonded to a wafer comprising an integrated transponder circuit 82 and terminal contacts 84 so that an electrical contact between the terminal contacts 84 and the conductor metal of the conducting channels 38 is established. For example, a solder ball grid array may be applied to the ends of the channels 38 and/or the terminal contacts 84. Further, a thermoadhesive 43 may be employed for bonding. The wafers are then attached after heating and remelting the solder balls and the thermoadhesive 43, so that solder connections 86 are formed between the metal of the channels 38 and the terminal contacts 84.

Accordingly, a wafer assembly with a multitude of transponder devices as shown in the section of Fig. 9 is obtained, whereby each transponder device comprises at least one integrated circuit 82 on a first substrate 80, whereby the first substrate 80 having a first surface with terminal contacts 84 for contacting the integrated circuit 82, and whereby the transponder device further comprises further substrates 20, 50, 60, 70, each having a coil 34 arranged thereon, and wherein the further substrates 20, 50, 60, 70 and the first substrate 80 are stacked and bonded together, and wherein the coils 34 are connected to the terminal contacts 84 on the first substrate 80 via conductors, namlely the conducting channels 80, arranged on the further substrates 20, 50, 60, 70, and whereby the coils 34 together form an antenna coil for the transponder device. The respective transponder devices, which are still connected together are then separated by dicing the wafer assembly.

Although all coils are connected in parallel, it is possible to produce high impedance antenna coils. The coils 34 may have many windings, which would increase the resistance too much to be useful as an antenna. However, by stacking the coils together and connecting these together, the ohmic resistance is lowered, so that thin film flat spiral coils with many windings and high impedance can be used for the transponder device.

This way, the coils 34 on wafers 20, 50, 60, 70 are connected to at least one of said terminal contacts on said first substrate via a conducting channel extending through at least said two further substrates.

Subsequently, a second embodiment of the invention is illustrated in conjunction with Figs. 10 to 18.

The method according to this embodiment bases on the steps of:
- providing a first wafer with integrated circuits and terminal contacts for contacting the integrated circuit,
- producing a coil with terminal contacts on a second wafer, then
- bonding the second wafer with the side having the coil thereon to a support wafer, then
- thinning the second wafer, then
- repeating the steps of producing a coil, bonding and thinning for at least one further wafer, whereby terminal contacts each with an opening are produced, and whereby the terminal contacts of adjacent wafers coincide in their lateral positions, then
- masking the exposed surface of the last bonded wafer so that areas opposite to the terminal contacts remains unmasked, then
- selectively removing substrate material beneath the unmasked area to produce through-holes through the further substrates and expose the terminal contacts of the coils,
- deposit conducing material into the through-holes, and
- bonding the so obtained stack to the first wafer comprising integrated circuits so that an electrical contact between the terminal contacts and the conducting material is established.

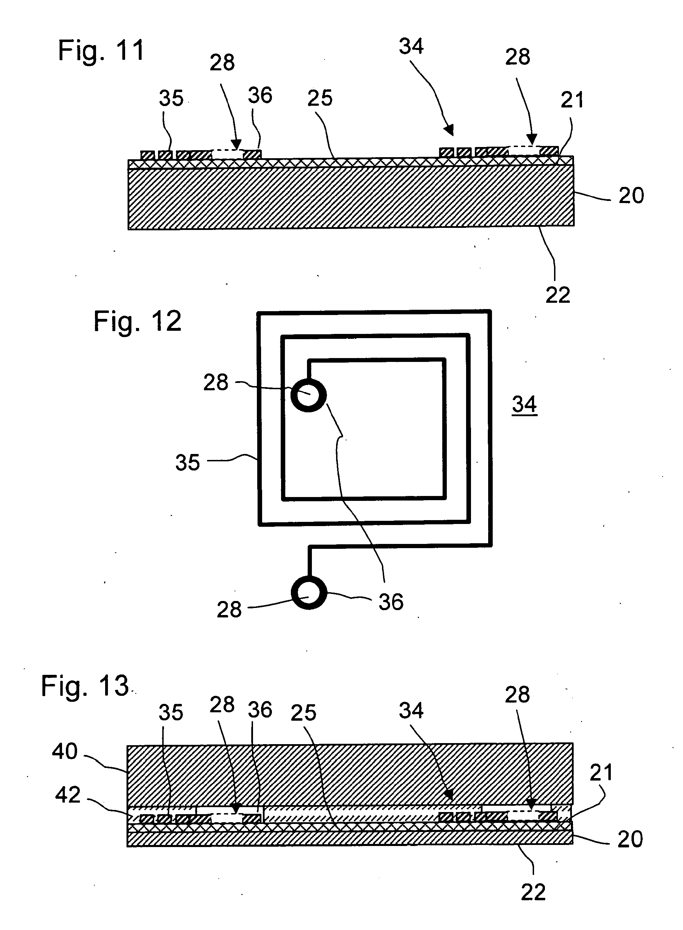

Similarly to the embodiment depicted in Fig. 2, a passivation layer 25 and a metal layer 30 are formed on side 21 of wafer 20. However, in contrast to Fig. 2, no blind holes for forming via contacts have been etched into this side. In a next step, shown in Fig. 11, a coil is formed on side 21 of wafer 20 by structuring metal layer 30. For example, metal layer 30 may be covered with a photoresist which is then structured using a photomask. The metal layer 30 may then be etched to form coil 35.

Furthermore, by structuring metal layer 30, terminal contacts 36 for coil 34 are formed. Thereby, each of the terminal contacts 36 is formed so as to have an opening 28 therein. An aspect view of a typical flat spiral coil 34 according to this embodiment of the invention having terminal contacts 36 with an opening therein is shown in Fig. 12. One of the terminal contacts 36 is located inside of the windings 35 and the other terminal contact 36 is located outside so as to connect to the coil ends of the flat spiral coil 34.

Subsequently, as shown in Fig. 13 and similar to the steps shown in Figs. 4 and 5, a support wafer 40 is bonded onto side 21 using a suitable adhesive 42. Then, wafer 20 is thinned on the opposite side 22.

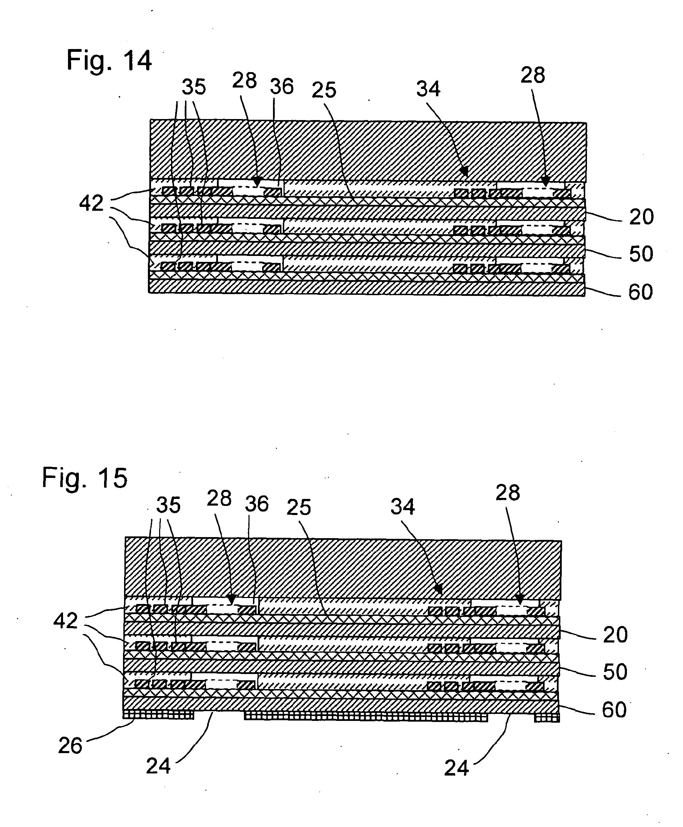

The steps of producing a coil 34, bonding and thinning are repeated for one or more further wafers, whereby in each case terminal contacts each with an opening are produced. A wafer stack fabricated in this manner is shown in Fig. 14. As can be seen in Fig. 14, the wafers are bonded with coinciding lateral positions of the terminal contacts 36.
Fig. 14 exemplary shows a stack of three coil wafers 20, 50, 60. However, the number of wafers may of course vary depending on the resistance and impedance to be achieved.

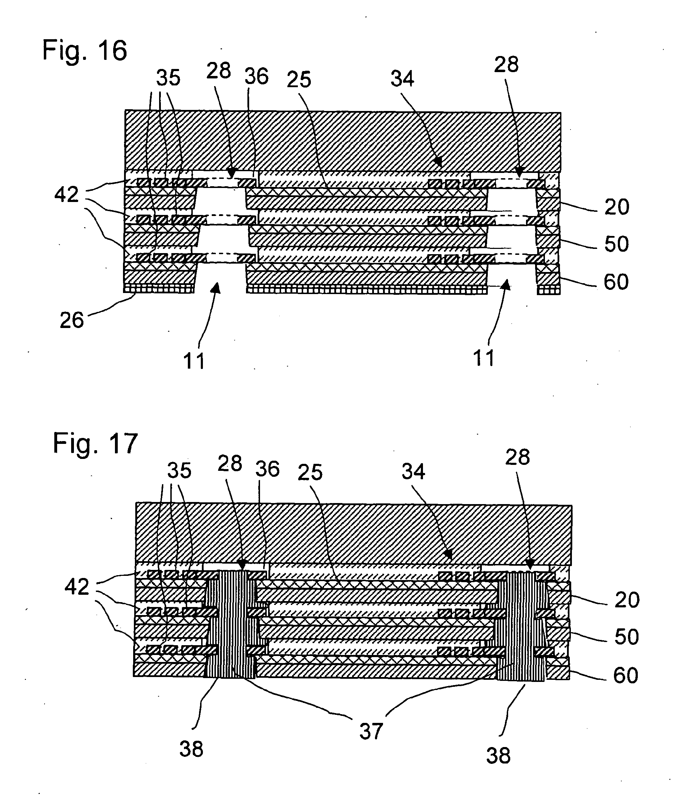

As shown in Fig. 15, the exposed surface of the last bonded wafer 60 is masked with a layer 26, preferably a photoresist layer, so that areas 24 opposite to the terminal contacts 36 remains unmasked. Subsequently, as shown in Fig. 16, substrate material beneath the unmasked areas 24 is selectively removed to produce through-holes 11 through substrates 20, 50, 60. Removal of the substrate material is preferably accomplished by etching. As an etching process is chosen, which is selective on the substate material, e.g., selective on silicon, the terminal contacts 36 of the coils are partly exposed. In particular, ring shaped portions around the openings 28 of the terminal contacts 36 are uncovered due to the etching.

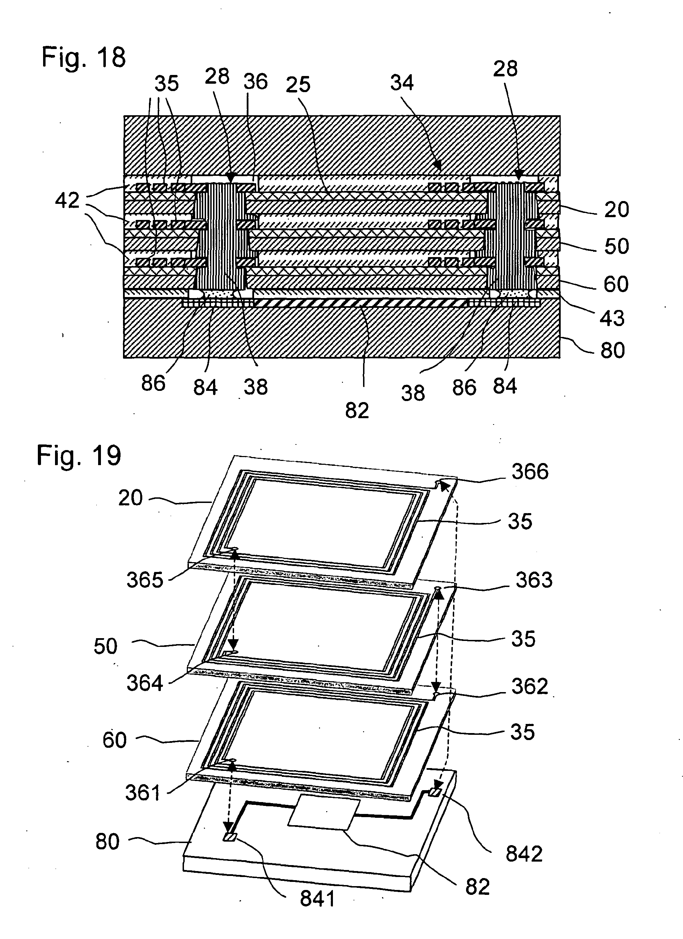

Similarly to the embodiment of Fig. 8, the through-holes 11 are then filled with conductor metal 37 or another conducing material such as conductive epoxy so as to produce conducting channels 38 which interconnect the respective terminal contacts 36 aligned upon another. This coil wafer stack as shown in Fig. 17 is bonded to a first wafer 80 with an integrated transponder circuit 82 and terminal contacts 84 for contacting the integrated circuit with the coils 34 in a way analogous to the embodiment of Fig. 9 using a ball grid array which forms solder connections 86 and thermoadhesive 34 for attaching wafer 80 to wafer 60 of the coil wafer stack. The resulting device is depicted in Fig. 18.

Fig. 19 shows a transponder device according to a further embodiment of the invention in exploded view. Similarly to the embodiments described above, the transponder device of Fig. 19 comprises a stack of coil substrates 20, 50, 60 and a first substrate 80 with integrated transponder circuit 82 and terminal contacts 841, 842 for contacting the integrated circuit 82. The terminal contacts 841, 842 are connected to the integrated circuit 82 via conductors 85.

However, in difference to the embodiments described above, the flat spiral coils 34 are connected in series. The electrical connections are symbolised by dotted arrows. Accordingly, terminal contact 841 on first subtstrate 80 is connected to terminal contact 361 of coil 34 on substrate 60 which is bonded to first substrate 80. The connection, as the other connections between adjacent substrates is accomplished by a through contact, preferably by producing a conducting channel extending through a substrate. In the embodiment shown in Fig. 19, accordingly, a through contact for electrically connecting terminal contacts 841 and 361 extends through substrate 60.

The other terminal contact 362 of coil 34 on substrate 60 is connected to terminal contact 363 of coil 34 on substrate 50 which is bonded to substrate 60. Similarly, terminal contact 365 of coil 34 on further substrate 20 is connected to the other terminal contact 364 of coil 34 on substrate 50.

Finally, an electrical connection of terminal contact 366 of coil 34 on substrate 20 with terminal contact 842 on first substrate 80 is established. For this contact, a trhrough contact extending through all coil substrates 20, 50, 60 may be produced. For example, this through contact may be produced similarly to the embodiment descibed with respect to Figs. 10 to 18, with the difference that the conducting channel 38 does not connect to terminal contacts of the intermediate substrates 50, 60.

This way, all coils 34 are connected in series. Furthermore, as it is apparent from Fig. 19, subsequently connected coils 34 have alternating sense of rotation. Specifically, in the embodiment of Fig. 19, the spiral windings of coil 34 on substrate 50 rotates with oppposite sense of rotation with respect to the spiral windings of coils 34 on substrates 20 and 60. However, as the electrical connections are alternatingly connecting inner terminal contacts with outer terminal contacts and vice versa, the sense of rotation of current flowing through the coils 34 is maintained, so that the magnetic field of alll coils is summed up. Furthermore, by employing coils with alternate sense of rotation, there is no need for bridging electrical conductors on any surface of the substrates 20, 50, 60, 80.

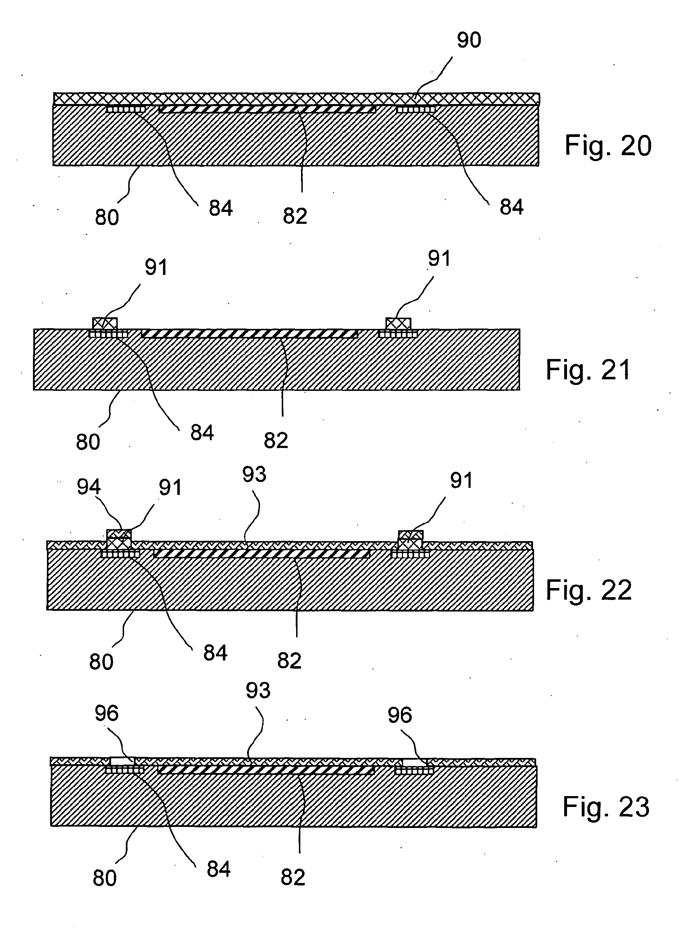

The cross-sectional views of Figs. 20 to 27 illustrate fabrication steps for a transponder device with coil antenna according to a third embodiment of the invention. In difference to the embodiments described hereinbefore, a stack of coils is produced by successive deposition of layers on the substrate of the RFID-chip instead of producing a stack of further substrates.

Fig. 20 shows the first wafer 80 with an integrated transponder circuit 82 and terminal contacts 84. In a first step, the wafer is covered with a photoresist-layer 90. The photoresist-layer 90 is then photolithographically structured by structured exposition and development so that protrusions 91 covering the terminal contacts 84 remain from the layer 90. Subsequently, as shown in Fig. 22, an insulating layer 93, preferably a glass layer is deposited onto the side of wafer 80 with integrated transponder circuit 82 and terminal contacts 84. The layer 93 may preferably be deposited by thermal evaporation of a glass target. It is particularly preferred to deposit the layer by electron beam evaporation.

After deposition of insulating layer 93, the remaining protrusions 92 of the photoresist layer are removed, e.g. by dissolution in a suitable solvent. Thereby, the parts 94 of glass layer 93 covering the protrusions 92 are removed. As the film thickness of glass layer 93 is lower than the film thickness of the photoresist layer and the height of the protrusions, respectively, the glass layer 93 is interrupted at the edges of the protrusions. This facilitates removal of the remaining photoresist and the parts 94 of the glass layer deposited thereon.

As a result shown in Fig. 23, a glass layer 93 on wafer 80 with openings 96 at the terminal contacts 84 is produced.

Instead of a glass layer 93, a SiO₂-layer or a plastic layer may be used. A plastic layer with openings 96 may be produced by photolithographic structuring of a photosensitive plastic such as polyimide (PI) or bisbenzocyclobutene (BCB). In this case, a photoresist layer 90 may be applied and then structured complementary to Fig. 21. If SiO₂ is used as insulating layer 93, plasma assisted chemical vapor deposition may be employed for deposition. Further, inorganic layers as insulating layers may generally applied by a sol-gel process.

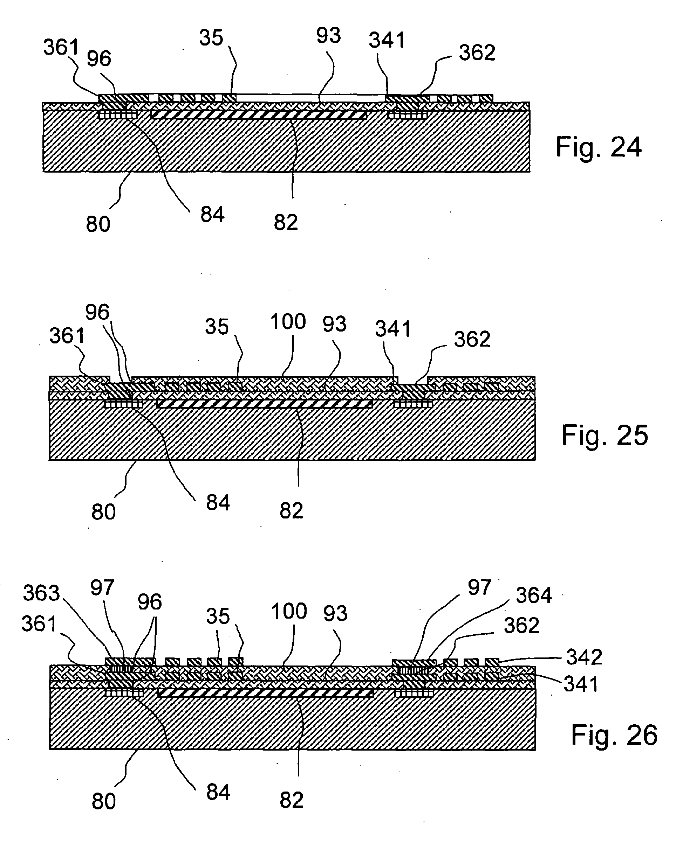

As a subsequent step shown in Fig. 24, a first flat spiral conductor coil 341 with windings 35 is produced on insulating layer 93, whereby the coil ends 361, 361 extend over the openings 96 and thereby connect to the terminal contacts 84. In order to facilitate the electrical contact, the openings 96 may be plugged or lined with conducting material prior to deposition of the conductor coil metal.

Then, as shown in Fig. 25, a further insulating layer 100 is deposited onto layer 90 covering coil 341. Again, layer 100 is structured having openings 96 over the coil ends 361, 362. Layer 100 with openings 96 may be produced similarly to layer 90.

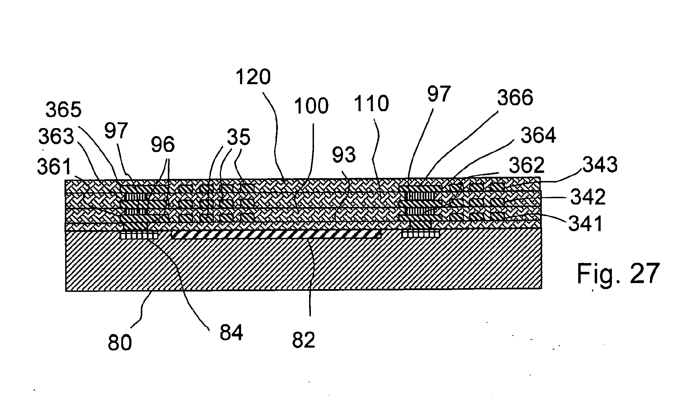

Fig. 26 shows the wafer 80 with openings 96 of layer 100 plugged with conducting material 97. Furthermore, a second flat spiral coil 342 has been deposited onto layer 100 with coil ends 363, 364 connecting to the conductor material 97 inside of the openings 96 of layer 100. The steps of depositing an insulating layer with openings or through-holes 96 and depositing a flat spiral coil thereon may be repeated one or more times. The embodiment exemplary shown in Fig. 27 has a third insulating layer 110 and a third flat spiral coil 343 deposited thereon with coil ends 365, 366 connecting to the conductor material 97 applied into the openings 96 of layer 110. A final insulation layer 120 is deposited so as to bury the stack of interconnected coils 341, 342, 343. In difference to the embodiment as described with respect to Figs. 20 to 27, the conductor material may be as well applied after deposition of the respective coil which connects thereto.

Furthermore, the coils 341, 342, 343 of this embodiment are connected in parallel. It is understood, that a serial connection may be established as well, e.g. by depositing insulating layers with through holes and coils with subsequent alternating sense of rotation similarly to Fig. 19. Accordingly, the substrates 60 50, 20 of the embodiment shown in Fig. 19 may be replaced by subsequently deposited insulating layers and flat spiral coils.

Generally, it is also possible, to combine deposited insulating layers and further substrates to form a coil stack. For example, a first coil may be produced on the RFID-substrate and one or more further substrates with coils thereon may then be bonded to the RFID-substrate.

Although this disclosure describes illustrative embodiments of the invention in detail, it is to be understood that the invention is not limited to the embodiments as described, anc that various modifications may be applied within the scope of the invention. In particular, features of the exemplary embodiments described with respect to the enclosed figures may be combined without leaving the scope of the invention.

## Claims

1. A transponder device comprising at least one integrated circuit on a first substrate, said first substrate having a first surface with terminal contacts for contacting said integrated circuit, whereby said transponder device further comprises at least two further substrates or layers each having a coil arranged thereon, said further substrates or layers and said first substrate are stacked together, and said coils being connected to said terminal contacts on said first substrate via conductors, whereby said coils together forming an antenna coil for said transponder device.

2. A transponder device according to claim 1, wherein said first and said further substrates and bonded together.

3. The transponder device as defined in claim 1, whereby said conductors comprise at least one conducting connection extending through at least one of said further substrates or layers and transversely to the surfaces of the stacked substrates or layers facing each other.

4. The transponder device according to claim 2, wherein said conducting connection comprise conductor-filled or conductor lined openings or tapered through-holes.

5. The transponder device as defined in one of the preceding claims, whereby at least one of said conductors is arranged on at least one lateral surface of at least one of said further substrates or layers.

6. The transponder device according to one of the preceding claims, whereby said coils are structured thin film conductors deposited onto said further substrates or layers, preferably thin film conductors forming a flat spiral coil.

7. The transponder device according to one of the preceding claims, whereby said further substrates or layers comprise an inorganic rigid material, preferably glass or a semiconductor.

8. The transponder device according to one of the preceding claims, whereby said transponder device is a radio frequency identification device.

9. The transponder device according to one of the preceding claims, further including at least one further electronic component on at least one of said at least two further substrates or layers.

10. The transponder device according to one of the preceding claims, whereby at least one of said further substrates comprises at least one integrated circuit.

11. The transponder device according to one of the preceding claims, wherein at least two of said coils are connected to at least one of said terminal contacts on said first substrate via a conducting channel extending through at least said two further substrates or layers.

12. The transponder device according to one of the preceding claims, comprising a rigid cap substrate on top of the further substrates or layers.

13. The transponder device according to one of the preceding claims, wherein the further substrates are thinned semiconductor substrates.

14. The transponder device according to one of the preceding claims, wherein the coils on the further substrates have terminal contacts with an opening therein.

15. The transponder device according to one of the preceding claims, whereby coils with different sense of rotation are stacked and connected in series.

16. A wafer assembly comprising a plurality of transponder devices according to one of the preceding claims.

17. A method for fabricating a transponder device, in particular a transponder device according to one of the preceding claims, comprising:
- providing a first substrate comprising at least one integrated circuit said first substrate having a first surface with terminal contacts for contacting said integrated circuit,
- producing coils on each of at least two further substrates or at least two layers deposited onto said first substrate, , and
- connecting said coils to said terminal contacts on said first substrate by producing conductors arranged on the further substrates, so that said coils together form an antenna coil for said transponder device.

18. The method according to the preceding claim, wherein said first substrate and said at least two further substrates are stacked and bonded together.

19. The method according to one of the preceding claims, further including thinning said further substrates.

20. The method as defined in the preceding claim, whereby producing conductors comprises producing conducting channels extending through at least one of said further substrates or layers and transversely to the surfaces of the stacked substrates or layers facing each other.

21. The method according to one of the preceding claims, wherein said layers are produced by vacuum-deposition of an insulating material.

22. The method according to the preceding claim, wherein said layers are deposited by thermal evaporation of glass.

23. The method as defined in the preceding claim, wherein producing said conducting channels comprises producing through-holes and filling or at least partially lining said through-holes with a conducting material.

24. The method according to the preceding claim, wherein at least one through hole in one of said layers for connecting said coils is produced by producing a protrusion onto the surface to be coated, depositing said layer and then removing said protrusion together with the layer deposited thereon.

25. The method as defined in the two preceding claims, wherein the through-holes are filled or at least partially lined with a conducting material after bonding said further substrates together.

26. The method according to one of the both preceding claims, wherein a coil is produced on a further substrate having a terminal contact with an opening therein, and wherein a through-hole through the substrate is produced by selectively etching the substrate material through the opening.

27. The method according to one of claims 17 to 20, wherein producing said conducting channels comprises producing tapered blind holes and thinning said further substrate on the side opposite to the side, in which the tapered blind holes have been introduced until the tapered blind hole opens to the thinned side.

28. The method as defined in one of the preceding claims, whereby at least one of said conductors is deposited on at least one lateral surface of at least one of said further substrates.

29. The method as defined in one of the preceding claims, whereby producing said coils comprises producing structured thin film conductors by deposition of conducting material onto said further substrates.

30. The method according to one of the preceding claims, further comprising producing at least one electronic component on at least one of said further substrates.

31. The method according to one of the preceding claims, wherein connecting said coils to said terminal contacts on said first substrate comprises connecting at least two of said coils to at least one of said terminal contacts on said first substrate via a conducting channel extending through at least said two further substrates.

32. The method according to one of the preceding claims, **characterized in that** at least the steps of
- producing coils on each of at least two further substrates,
- stacking and bonding said first substrate and said at least two further substrates together, and
- connecting said coils to said terminal contacts on said first substrate by producing conductors arranged on the further substrates, so that said coils together form an antenna coil for said transponder device are carried out at wafer level.

33. The method according to one of the preceding claims, wherein stacking and bonding said first substrate and said at least two further substrates together comprises bonding a first of said at least two further substrates on a support substrate and then bonding a second substrate of the at least two further substrates to said first of said at least two further substrates.

34. The method according to the preceding claims, wherein said first substrate of said at least two further substrates is thinned after bonding to said support substrate and prior to bonding a second substrate of the at least two further substrates to said first of said at least two further substrates.

35. The method according to the preceding claims, comprising the steps of:
- providing a first wafer with integrated circuits and terminal contacts for contacting said integrated circuit,
- etching blind holes into a second wafer, then
- coating a passivation film on the side of the second wafer with the blind holes, then
- fabricating a coil on the second wafer, and
- bonding the second wafer onto a support wafer, then
- thinning the wafer bonded onto a support wafer, at least until the blind-holes are exposed so that through-holes are formed,
- repeating the steps of etching blind holes, coating a passivation film and fabricating a coil on a third wafer,
- bonding the third wafer onto the second wafer so that the blind-holes laterally coincide with the through-holes of the unterlying wafer,
- thinning the third wafer at least until the blind-holes are exposed so that through-holes are formed,
- optionally repeating the steps of etching blind holes, coating a passivation film, fabricating a coil, bonding and thinning at least until the blind-holes are exposed so that through-holes are formed on one or more wafers,
- masking the through-holes on the surface of the last bonded wafer,
- coating a passivation film,
- removing the mask,
- depositing conducting material in the through-holes, and
- bonding the so obtained stack to the first wafer comprising integrated circuits so that an electrical contact between the terminal contacts and the conducting material is established.

36. The method according to the preceding claims, comprising the steps of:
- providing a first wafer with integrated circuits and terminal contacts for contacting said integrated circuit,
- producing a coil with terminal contacts on a second wafer, preferably producing said coil on a passivation layer on said second wafer, then
- bonding said second wafer with the side having said coil thereon to a support wafer, then
- thinning said second wafer, then
- repeating the steps of producing a coil, bonding and thinning for at least one further wafer, whereby terminal contacts each with an opening are produced, and whereby the terminal contacts coincide in their lateral positions,
- masking the exposed surface of the last bonded wafer so that areas opposite to the terminal contacts remains unmasked, then
- selectively removing substrate material beneath the unmasked area to produce through-holes through the further substrates and expose the terminal contacts of the coils,
- deposit conducing material into the through-holes, and
- bonding the so obtained stack to the first wafer comprising integrated circuits so that an electrical contact between the terminal contacts and the conducting material is established

37. The method according to one of the preceding claims, whereby coils with different sense of rotation are stacked and connected in series.
